# EUROPÄISCHE PATENTSCHRIFT

(11) **EP 4 409 160 B1**
(45) Veröffentlichungstag und Bekanntmachung des Hinweises auf die Patenterteilung: **05.11.2025**
(21) Anmeldenummer: 22786264.6
(22) Anmeldetag: 28.09.2022
(51) Int. Cl.: F16H 37/04, F16H 3/08, F16H 3/093

(54) **GETRIEBEANORDNUNG**
TRANSMISSION ASSEMBLY
ENSEMBLE TRANSMISSION

(30) Priorität: 29.09.2021 AT 507712021; 29.09.2021 AT 507722021; 29.09.2021 AT 507732021
(43) Veröffentlichungstag der Anmeldung: 07.08.2024
(73) Patentinhaber: AVL List GmbH, 8020 Graz (AT)
(72) Erfinder: STÖCKL, Dieter, 4400 STEYR (AT); PILAT, Günter, 4400 ST. ULRICH/STEYR (AT)
(74) Vertreter: Babeluk Patentanwälte GmbH
(86) Internationale Anmeldenummer: PCT/AT2022/060338
(87) Internationale Veröffentlichungsnummer: WO 2023/049947

(56) Entgegenhaltungen:
- EP-B1- 1 059 468
- DE-A1- 102013 220 991
- DE-A1- 102017 217 396
- US-A- 4 245 519

## Beschreibung

Die Erfindung betrifft eine Getriebeanordnung für ein Fahrzeug mit einem Power-Shift-Getriebe und einem weiteren Getriebe mit zumindest zwei verschiedenen Übersetzungsstufen, wobei die Getriebe in Serie geschaltet sind.

Durch einen solchen Aufbau sind durch solche Getriebeanordnungen besonders viele gut verteilte Schaltstufen möglich. Dafür sind jedoch eine Vielzahl an Kupplungseinrichtungen notwendig, was platzintensiv ist. Dies führt zu komplexen, voluminösen Ausführungen.

In der EP 3 428 480 A2 wird eine solche Getriebeanordnung offenbart, wobei eine Zwischenwelle über viele Losräder mit einem Losrad einer Eingangswelle drehverbunden werden können. Dabei ist das Losrad auf der Eingangswelle nicht mit diesen drehverbindbar, sondern kann nur über die Losräder der Zwischenwelle angetrieben werden. Dies ermöglicht zwar eine recht große Zahl an unterschiedlichen Schaltstufen, jedoch ist der Aufbau komplex und es kann zu teilweise ungünstig verteilten Schaltstufen führen.

In der EP 0 481 014 A1 wird eine Getriebeanordnung beschrieben, die mehrere Getriebe aufweist, wobei diese über mehrere Wellen drehverbindbar sind. Dabei kämmen Kupplungsglocken miteinander und bedingen zusätzlich zu Festrad-Losrad-Verbindungen verschiedene Übersetzungsverhältnisse. Dies bedingt einen sehr komplexen Aufbau und beschränkt die räumlichen Anordnungsmöglichkeiten der Getriebe zueinander. Die EP 1 059 468 B1 offenbart ein weiteres Beispiel einer Getriebeanordnung.

Aufgabe der Erfindung ist daher, eine Getriebeanordnung der genannten Art bereitzustellen, die ein sinnvolles Schalten in möglichst vielen verschiedenen Schaltstufen ermöglicht, und gleichzeitig möglichst einfach und platzsparend ist.

Diese Aufgabe wird erfindungsgemäß dadurch gelöst, dass
- das erste Power-Shift-Getriebe eine Eingangswelle, eine Zwischenwelle und eine Ausgangswelle aufweist,
- dass die Zwischenwelle über eine erste Zahnradstufe mit der Eingangswelle drehverbunden oder drehverbindbar ist,
- dass zumindest ein erstes Losrad auf der Eingangswelle angeordnet ist und mit der Eingangswelle über eine erste Kupplungseinrichtung mit ihr drehverbindbar ist,
- dass das erste Losrad über je eine Zahnradstufe mit zumindest zwei Losrädern der Zwischenwelle, welche über Kupplungseinrichtungen mit der Zwischenwelle drehverbindbar sind, drehverbunden ist und
- dass das erste Losrad über je eine Zahnradstufe mit zumindest zwei Losrädern der Ausgangswelle, welche über Kupplungseinrichtungen mit der Ausgangswelle drehverbindbar sind, drehverbunden ist.

Durch eine derartige Ausführungsform können insgesamt zumindest sechs verschiedene sinnvolle Schaltstufen durch das Power-Shift-Getriebe allein erreicht werden, wobei nur fünf Kupplungselemente notwendig sind. Durch das weitere Getriebe wird die Zahl an Schaltstufen mindestens verdoppelt, also weiter erhöht. Dies ermöglicht eine besonders einfache und platzsparende Ausführung trotz einer Vielzahl an Schaltmöglichkeiten. Dabei können auch die Drehzahlabstufungen zwischen den Gängen besonders gleichmäßig gestaltet werden, womit die drehmomentbereitstellende Antriebseinrichtung, in der Regel eine Brennkraftmaschine und/oder ein Elektromotor, stets bei optimalen Drehzahlen betrieben werden kann.

Eine Zahnradstufe kann dabei in einem einfachen Fall aus dem ersten Losrad und einem weiteren Losrad oder Festrad bestehen, welche miteinander kämmen. Alternativ können auch zwischen diesen Zahnrädern ein oder mehrere weitere Zahnräder angeordnet sein.

In Serie geschaltet bedeutet, dass zwischen der Haupteingangswelle und der Hauptausgangswelle der Getriebeanordnung das Power-Shift-Getriebe als auch das weitere Getriebe geschalten sind und dass diese zwei Getriebe entlang des Antriebsstrangs hintereinander geschaltet sind.

Im Sinne der Erfindung wird unter drehverbunden oder drehfest verbunden eine drehfeste Verbindung zweier Elemente oder Komponenten verstanden. Es wird also zwischen den Elementen stets eine Drehbewegung und Drehmoment übertragen, sofern sich eine der beiden Elemente dreht oder ein Drehmoment auf dieses ausgeübt wird. Unter einer drehverbindbaren Verbindung wird im Sinne der Erfindung hingegen eine Verbindung zweier Komponenten verstanden, die sowohl drehfest als auch lösbar sein kann, beispielsweise eine Verbindung mittels einer Kupplungseinrichtung wie einer Trennkupplung, wobei bei geschlossener Kupplungseinrichtung eine drehfeste Verbindung vorliegt und bei geöffneter Kupplungseinrichtung eine gelöste Drehverbindung, das heißt bei geöffneter Kupplungseinrichtung sind die mittels der Kupplungseinrichtung verbundenen Komponenten drehbeweglich gegeneinander, können jedoch durch Schließen der Kupplungseinrichtung miteinander drehverbunden werden und sind daher miteinander drehverbindbar.

Eine Kupplungseinrichtung im Sinne der Erfindung ist eine Drehmomentübertragungsvorrichtung, welche in mindestens zwei Schaltzuständen betrieben werden kann, vorzugsweise in einem geschlossenen Schaltzustand, in welchem ein Drehmoment über die Kupplungseinrichtung übertragen werden kann, und in einem geöffneten Zustand, in welchem ein Leistungsfluss zwischen zwei jeweils mit der Kupplungseinrichtung, insbesondere mechanisch verbundenen Komponenten getrennt ist und somit kein Drehmoment über die Kupplungseinrichtung übertragen werden kann. Dazu weist eine Kupplungseinrichtung vorzugsweise wenigstens zwei Kupplungsteile auf, wobei die beiden Kupplungsteile in einem Schließzustand der Kupplungseinrichtung miteinander mechanisch vorzugsweise drehverbunden sind, insbesondere reibschlüssig oder formschlüssig, und in einem geöffneten Zustand unabhängig voneinander insbesondere drehbeweglich gegeneinander sind.

Vorzugsweise ist vorgesehen, dass das weitere Getriebe ein weiteres Power-Shift-Getriebe umfasst und/oder dass das weitere Getriebe ein Schaltgetriebe umfasst.

Power-Shift-Getriebe im Sinne der Erfindung sind lastschaltbare Getriebe, also Getriebe, die während der Drehmomentübertragung geschalten werden können, ohne die Drehmomentübertragung vollständig zu unterbrechen.

Schaltgetriebe im Sinne der Erfindung sind nicht lastschaltbare Getriebe, bei denen es während Schaltvorgängen zu Drehmomentunterbrechungen kommt. Es wird also bei einem Gangwechsel zunächst ein erster Gang ausgelegt und der Leistungsfluss unterbrochen, bevor ein zweiter Gang eingelegt wird.

Vorzugsweise weisen die Kupplungseinrichtungen der Power-Shift-Getriebe zumindest teilweise Lamellenkupplungen auf.

Unter einer Eingangswelle eines Getriebes, insbesondere unter der Eingangswelle des Power-Shift-Getriebes, wird eine Welle des zugehörigen Getriebes verstanden, über welche eine Leistung, insbesondere eine Antriebsleistung auf das jeweils zugehörige Getriebe aufgebracht werden kann.

Unter einer Ausgangswelle eines Getriebes, insbesondere unter der Ausgangswelle des Power-Shift-Getriebes, ist im Sinne der Erfindung jeweils eine Welle zu verstehen, über welche eine auf das jeweils zugehörige Getriebe aufgebrachte Leistung abgeführt werden kann. Die Begriffe Eingangswelle und Ausgangswelle sind dabei nicht räumlich einschränkend zu verstehen, d.h. die Eingangswelle und die Ausgangswelle müssen sich nicht zwangsläufig auf unterschiedlichen Seiten eines Getriebes befinden, sondern können durchaus auf einer Seite dicht nebeneinander angeordnet sein. Dabei kann auch vorgesehen sein, dass in bestimmten Arbeitszuständen die Richtung des Leistungsflusses vorübergehend umgekehrt werden kann.

Vorzugsweise ist vorgesehen, dass das erste Losrad über Zahnradstufen mit zumindest drei Losrädern der Ausgangswelle, welche über Kupplungseinrichtungen mit der Ausgangswelle drehverbindbar sind, drehverbunden ist. Durch eine derartige Ausführungsform können insgesamt 9 verschiedene sinnvolle Schaltstufen durch das Power-Shift-Getriebe allein erreicht werden, wobei nur sechs Kupplungselemente notwendig sind.

Das erste Losrad ist über die erste Kupplungseinrichtung derart mit der Eingangswelle drehverbindbar, dass bei geschlossener erster Kupplungseinrichtung das erste Losrad und die Eingangswelle mit gleicher Drehzahl drehen. Die erste Kupplungseinrichtung ist eingangsseitig drehfest mit der Eingangswelle und ausgangsseitig drehfest mit dem ersten Losrad verbunden. Somit kann das erste Losrad allein durch Schalten der ersten Kupplungseinrichtung, ohne dass eine andere Kupplungseinrichtung geschaltet werden muss, mit der Eingangswelle drehverbunden werden.

Vorzugsweise ist vorgesehen, dass zumindest ein zweites Losrad auf der Zwischenwelle angeordnet ist und über zumindest eine zweite Kupplungseinrichtung mit ihr drehverbindbar ist, dass das erste Losrad über eine zweite Zahnradstufe mit dem zweiten Losrad drehverbunden ist, dass zumindest ein drittes Losrad auf der Zwischenwelle angeordnet ist und über zumindest eine dritte Kupplungseinrichtung mit ihr drehverbindbar ist, dass das erste Losrad über eine dritte Zahnradstufe mit dem dritten Losrad drehverbunden ist, dass zumindest ein viertes Losrad auf der Ausgangswelle angeordnet ist und über zumindest eine vierte Kupplungseinrichtung mit ihr drehverbindbar ist, dass zumindest ein fünftes Losrad auf der Ausgangswelle angeordnet ist und über zumindest eine fünfte Kupplungseinrichtung mit ihr drehverbindbar ist, dass das vierte Losrad über eine vierte Zahnradstufe mit dem ersten Losrad drehverbunden ist, dass das fünfte Losrad über eine fünfte Zahnradstufe mit dem ersten Losrad drehverbunden ist. Damit wird eine einfache Schaltung mit wenigen Schaltelementen erreicht, welche dennoch eine hohe Zahl an sinnvollen Gängen ermöglicht.

In einer bevorzugten Ausführungsform ist vorgesehen, dass das Power-Shift-Getriebe dem weiteren Getriebe vorgeschaltet ist. Dies bedingt eine platzsparende Ausführung. Mit vorgeschaltet ist damit gemeint, dass das erste Power-Shift-Getriebe entlang des Antriebsstrangs näher an der Antriebseinrichtung ist, als das weitere Getriebe.

In einer bevorzugten Ausführungsform ist vorgesehen, dass zumindest eine Zahnradstufe, welche das erste Losrad mit einem anderen Losrad, vorzugsweise einem Losrad der Zwischenwelle, drehverbindet, besonders vorzugsweise die zweite Zahnradstufe, als Drehumkehrstufe ausgeführt ist. Durch eine solche Drehumkehrstufe wird erreicht, dass das Ausgangszahnrad der Zahnradstufe in eine andere Richtung dreht als die Ausgangszahnräder der Zahnradstufen der anderen Losräder, die auf der gleichen Welle angeordnet sind - sofern diese Zahnradstufen aktiv geschaltet sind. Mit anderen Worten ist mit Drehumkehrstufe eine Zahnradstufe gemeint, welche die Drehrichtung an der Ausgangswelle umkehrt, wenn über diese Zahnradstufe Drehmoment übertragen wird. Damit wird also ermöglicht, Rückwärtsgänge zu schalten. Durch eine Anordnung an der Zwischenwelle wird so erreicht, dass über die Schaltung eines Losrades verschiedene Vorwärtsgänge und über die Schaltung des anderen Losrades verschiedene Rückwärtsgänge geschaltet werden können. Zusätzlich sind noch weitere Vorwärtsgänge durch Schaltung der ersten Kupplungseinrichtung schaltbar. Dies ermöglicht ein ausgewogenes Angebot aus Vorwärts- und Rückwärtsgängen.

In einer bevorzugten Ausführungsform ist vorgesehen, dass die Zahnradstufen, welche das erste Losrad und die Losräder der Zwischenwelle drehverbinden, unterschiedliche Übersetzungen aufweisen und/oder dass die Zahnradstufen, welche das erste Losrad mit den Losrädern der Ausgangswelle drehverbinden, unterschiedliche Übersetzungen aufweisen, und dass vorzugsweise die Zahnradstufen, die das erste Losrad mit anderen Losrädern drehverbindet, unterschiedliche Übersetzungen aufweist. So kann die Zahl an verschiedenen schaltbaren Gängen möglichst erweitert werden, ohne die Vorrichtung zu verkomplizieren.

Weiters kann vorgesehen sein, dass das erste Losrad mehrere Stirnräder mit zumindest teilweise unterschiedlichen Durchmessern aufweist und vorzugsweise zumindest ein Stirnrad des ersten Losrades sowohl mit einem Zahnrad einer Zahnradstufe eines Losrades der Zwischenwelle als auch mit einem Zahnrad einer Zahnradstufe eines Losrades der Ausgangswelle kämmt. Damit können einerseits unterschiedliche Übersetzungsverhältnisse erreicht werden, trotzdem aber Platz gespart werden, indem die Stirnräder zumindest teilweise mit mehreren anderen Rädern kämmen.

Vorteilhaft ist, wenn ein erstes Stirnrad des ersten Losrades mit einem Zahnrad der zweiten Zahnradstufe, vorzugsweise dem zweiten Losrad, und mit einem Zahnrad der vierten Zahnradstufe, vorzugsweise dem vierten Losrad, kämmt und/ oder dass ein zweites Stirnrad des ersten Losrades mit einem Zahnrad der dritten Zahnradstufe, vorzugsweise dem dritten Losrad, und mit einem Zahnrad der fünften Zahnradstufe, vorzugsweise dem fünften Losrad, kämmt. Damit wird besonders viel Platz gespart und die Stirnräder des ersten Losrades optimal ausgenützt.

Wenn vorgesehen ist, dass die Getriebeanordnung ein Kriechganggetriebe aufweist, welches vorzugsweise zwischen dem Power-Shift-Getriebe und dem weiteren Getriebe geschaltet ist, so können bei Bedarf auch besonders hohe Übersetzungsverhältnisse erreicht werden. Mit Kriechganggetriebe ist dabei ein Getriebe gemeint, das die Schaltung von zumindest einem Kriechgang ermöglicht, bei dem das Übersetzungsverhältnis sehr hoch ist, also eine Übersetzung ins stark Langsamere erreicht wird, beispielsweise ein Übersetzungsverhältnis von 5 bis 10. Es kann auch vorgesehen sein, dass zumindest ein sechstes Losrad auf der Ausgangswelle angeordnet ist und über zumindest eine sechste Kupplungseinrichtung mit ihr drehverbindbar ist, und dass das sechste Losrad über eine sechste Zahnradstufe mit dem ersten Losrad drehverbunden ist. Dadurch sind insgesamt 9 sinnvolle Gänge möglich.

Um eine noch größere Vielfalt an sinnvollen Gängen zu erreichen, kann vorgesehen sein, dass zumindest ein siebtes Losrad auf der Ausgangswelle angeordnet ist und über zumindest eine siebte Kupplungseinrichtung mit ihr drehverbindbar ist, und dass das erste Losrad über eine siebte Zahnradstufe mit dem siebten Losrad drehverbunden ist.

Um eine besonders gleichmäßige Verteilung der Übersetzungen zwischen den verschiedenen Gängen zu erreichen kann vorgesehen sein, dass das Gesamtübersetzungsverhältnis der ersten Zahnradstufe und zumindest einer Zahnradstufe eines Losrades der Zwischenwelle und des ersten Losrades, vorzugsweise das Gesamtübersetzungsverhältnis der ersten Zahnradstufe und der dritten Zahnradstufe, kleiner 1 ist. Damit ist gemeint, dass eine Übersetzung ins schnelle erfolgt. Wird also über das Losrad der Zwischenwelle das Drehmoment übertragen, so dreht das erste Losrad schneller, als wenn das Drehmoment von der Eingangswelle direkt auf das erste Losrad über die erste Kupplungseinrichtung übertragen wird.

Um eine noch gleichmäßigere Verteilung der Übersetzungsverhältnisse der Gänge zu erreichen kann vorgesehen sein, dass die Übersetzungsverhältnisse Zahnradstufen des ersten Losrades mit den Losrädern der Ausgangswelle im Wesentlichen gleichmäßig abgestuft sind.

Damit ein besonders angenehmes Fahren und ein Betreiben der Antriebseinrichtung im optimalen Arbeitspunkt ermöglicht wird, kann vorgesehen sein, dass die Vorwärtsgänge des Power-Shift-Getriebes im Wesentlichen die gleichen Drehzahlabstufungen aufweisen. Mit Vorwärtsgängen sind dabei sämtliche Schaltgänge gemeint, die eine Vorwärtsbewegung des Fahrzeugs ermöglichen.

Die Erfindung wird im Folgenden anhand der nicht einschränkenden Figuren näher erläutert. Es zeigen:
- Fig. 1a: eine erfindungsgemäße Getriebeanordnung in einer schematischen Darstellung in einer ersten Ausführungsvariante;
- Fig. 1b: eine Schaltsequenz des Power-Shift-Getriebes der ersten Ausführungsform;
- Fig. 2a: eine erfindungsgemäße Getriebeanordnung in einer schematischen Darstellung in einer zweiten Ausführungsvariante;
- Fig. 2b: eine Schaltsequenz des Power-Shift-Getriebes der zweiten Ausführungsform;
- Fig. 2c: eine erfindungsgemäße Getriebeanordnung in einer schematischen Darstellung in einer dritten Ausführungsvariante;
- Fig. 3: eine erfindungsgemäße Getriebeanordnung in einer schematischen Darstellung in einer vierten Ausführungsvariante;
- Fig. 4: eine erfindungsgemäße Getriebeanordnung in einer schematischen Darstellung in einer fünften Ausführungsvariante;
- Fig. 5a: eine erfindungsgemäße Getriebeanordnung in einer schematischen Darstellung in einer sechsten Ausführungsvariante;
- Fig. 5b: eine Schaltsequenz des Power-Shift-Getriebes der sechsten Ausführungsform;
- Fig. 6a: eine erfindungsgemäße Getriebeanordnung in einer schematischen Darstellung in einer siebten Ausführungsvariante;
- Fig. 6b: eine Schaltsequenz des Power-Shift-Getriebes der siebten Ausführungsform;
- Fig. 7: eine erfindungsgemäße Getriebeanordnung in einer schematischen Darstellung in einer achten Ausführungsvariante;
- Fig. 8: eine erfindungsgemäße Getriebeanordnung in einer schematischen Darstellung in einer neunten Ausführungsvariante.

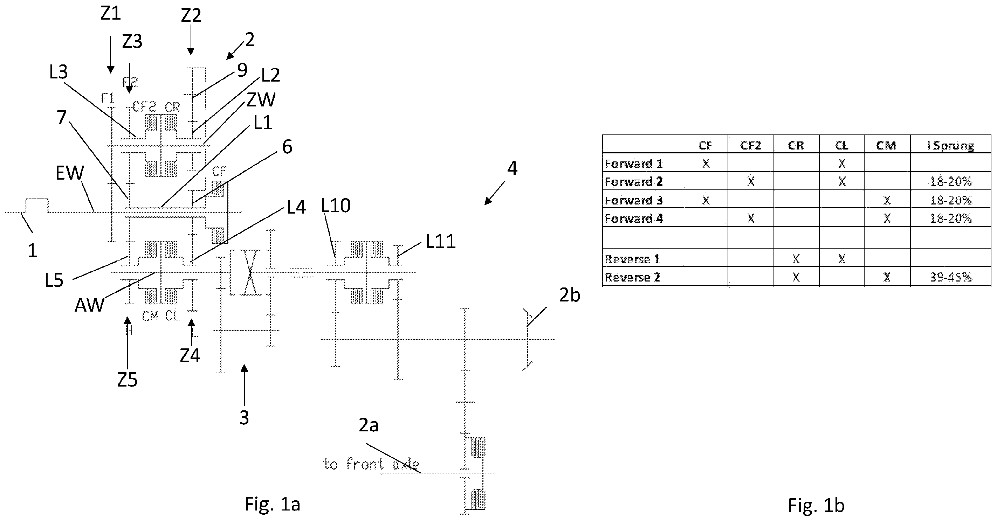

Die in den Figs. 1a und 1b beschriebene Ausführungsform ist eine erfindungsgemäße Getriebeanordnung mit einer Haupteingangswelle 1, welche mit einer nicht dargestellten Antriebseinrichtung drehverbunden ist. Eine Hauptausgangswelle 2 führt zu den angetriebenen Achsen des Fahrzeugs, angedeutet durch eine Vorderachse 2a und eine Verbindung zu einem teilweise gezeigten Differenzial 2b einer Hinterachse.

Die Getriebeanordnung weist ein Power-Shift-Getriebe 2, ein stromabwärts entlang des Antriebsstrangs geschaltetes, optionales Kriechganggetriebe 3 und ein stromabwärts des Kriechganggetriebes 3 geschaltetes weiteres Getriebe 4 auf, wobei das weitere Getriebe 4 als Schaltgetriebe ausgeführt ist. Dabei sind diese drei Elemente in Serie geschaltet. Das weitere Getriebe 4 weist insgesamt zwei unterschiedliche Schaltstufen auf und ist als Stirnradgetriebe ausgeführt.

Das Kriechganggetriebe 3 weist nur eine direkte, unübersetzte Schaltung und eine Übersetzung ins stark langsamere auf.

Das Power-Shift-Getriebe 2 weist eine Eingangswelle EW auf, welche mit der Haupteingangswelle drehverbunden ist und auf der ein erstes Losrad L1 mit zwei Stirnrädern 6, 7 angeordnet ist. Die Stirnräder 6, 7 sind allesamt fest mit dem ersten Losrad L1 drehverbunden, sodass eine Drehmomentbeaufschlagung auf ein Stirnrad 6, 7 eine Übertragung dieses Drehmoments auf das andere ergibt. Das erste Losrad L1 ist über eine erste Kupplungseinrichtung CF mit der Eingangswelle EW drehverbindbar, wobei die erste Kupplungseinrichtung CF eingangsseitig mit der Eingangswelle EW drehfest verbunden ist und ausgangsseitig mit dem ersten Losrad L1 drehfest verbunden ist. Somit kann das erste Losrad L1 allein durch Schalten der ersten Kupplungseinrichtung CF, ohne dass eine andere Kupplungseinrichtung geschaltet werden muss, mit der Eingangswelle EW drehverbunden werden. Bei geschlossener erster Kupplungseinrichtung CF drehen das erste Losrad L1 und die Eingangswelle EW mit gleicher Drehzahl.

Das Schaltgetriebe weist zwei Losräder L10, L11 auf, über welche mittels Lamellenkupplungen zwei unterschiedliche Übersetzungen schaltbar sind.

Eine Zwischenwelle ZW ist im Wesentlichen parallel zur Eingangswelle EW angeordnet. Sie ist über eine erste Zahnradstufe Z1 mit der Eingangswelle EW drehverbunden. Die erste Zahnradstufe Z1 weist dazu ein Stirnrad an der Eingangswelle EW auf, welches mit einem Stirnrad der Zwischenwelle ZW kämmt.

An der Zwischenwelle ZW sind zwei Losräder, ein zweites Losrad L2 und ein drittes Losrad L3 angeordnet, welche über eine zweite bzw. eine dritte Kupplungseinrichtung CR, CF2, mit der Zwischenwelle ZW drehverbindbar sind. Dabei kämmt das dritte Losrad L3 mit dem zweiten Stirnrad 7 des ersten Losrades L1. Somit stellt das dritte Losrad L3 und das zweite Stirnrad 7 gemeinsam eine dritte Zahnradstufe Z3 dar. Ein zweites Losrad L2 kämmt mit einem Zwischenstirnrad 9, welches wiederum mit dem ersten Stirnrad 6 des ersten Losrades L1 kämmt. Somit ist diese zweite Zahnradstufe Z2, welche aus dem zweiten Losrad L2, dem Zwischenstirnrad 9 und dem ersten Stirnrad 6 des ersten Losrades L1 besteht, als Drehumkehrstufe ausgeführt, da eine aktive Schaltung der zweiten Kupplungseinrichtung CR das erste Losrad L1 in eine andere Richtung drehen lässt, als bei aktiver Schaltung der ersten Kupplungseinrichtung CF oder der dritten Kupplungseinrichtung CF2.

Eine Ausgangswelle AW des Power-Shift-Getriebes 2 ist ebenso parallel zur Eingangswelle EW angeordnet. Dabei ist die Eingangswelle EW zwischen der Ausgangswelle AW und der Zwischenwelle ZW angeordnet. An der Ausgangswelle AW sind ein viertes Losrad L4 und ein fünftes Losrad L5 angeordnet, welche über eine vierte Kupplungseinrichtung CL, oder eine fünfte Kupplungseinrichtung CM mit der Ausgangswelle AW drehverbindbar sind. Dabei kämmt das vierte Losrad L4 mit dem ersten Stirnrad 6 und das fünfte Losrad L5 mit dem zweiten Stirnrad 7. Damit stellt das erste Stirnrad 6 und das vierte Losrad L4 eine vierte Zahnradstufe Z4 und das zweite Stirnrad 7 und das fünfte Losrad L5 eine fünfte Zahnradstufe Z5 dar.

In Fig. 1b sind in einem Diagramm die Schaltsequenzen des Power-Shift-Getriebes 2 dargestellt. Dabei ist sichtbar, dass das erste Losrad L1 über drei verschiedene Wege mit Drehmoment versorgt werden kann: durch Schließung der erste Kupplungseinrichtung CF, der dritten Kupplungseinrichtung CF2 oder der zweiten Kupplungseinrichtung CR, wobei durch letztere eine Richtungsumkehr erfolgt und damit Rückwärtsgänge schaltbar sind. Durch Schließen je einer der vierten oder fünften Kupplungseinrichtung CL, CM, können jeweils unterschiedliche Gesamtübersetzungen erreicht werden.

Alle Kupplungseinrichtungen CR, CF, CF2, CL, CM des Power-Shift-Getriebes 2 sind als Lamellenkupplungen ausgeführt.

Vorzugsweise ist die dritte Kupplungseinrichtung CF2 nicht anfahrtauglich ausgelegt. Damit ist gemeint, dass sie nicht zum Einkuppeln und Anfahren des Fahrzeugs bei im Wesentlichen stehendem Fahrzeug geeignet ist. Da dies über die Einkuppelung der ersten Kupplungseinrichtung CF erfolgt, kann die dritte Kupplungseinrichtung CF2 als reine Power-Shift-Kupplung ausgeführt werden und so Kosten und Platz gespart werden.

In der ersten Ausführungsform ist das Losrad L2, das als Drehumkehrstufe ausgeführt ist, auf der, dem Schaltgetriebe 4 zugewandten Seite des Power-Shift-Getriebes 2 angeordnet.

In einer alternativen Ausführungsform ist das Losrad, das als Drehumkehrstufe ausgeführt ist, auf der, dem Schaltgetriebe 4 abgewandten Seite des Power-Shift-Getriebes 2. Dies kann in bestimmten Ausführungen platzsparender sein.

Mit einer derartigen Ausführungsform können damit insgesamt 8 verschiedene Vorwärtsgänge und 4 verschiedene Rückwärtsgänge geschalten werden, wenn man von den Möglichkeiten durch das Kriechganggetriebe 3 absieht.

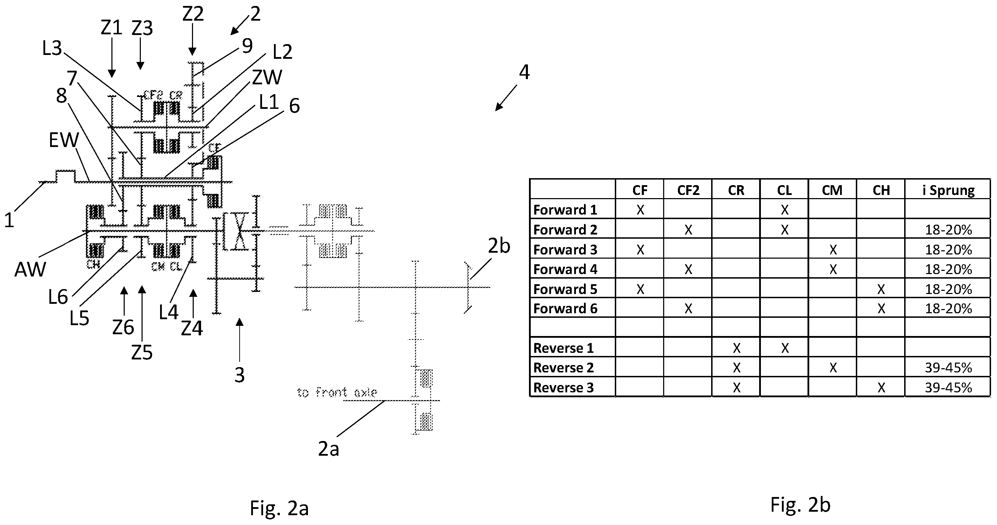

In der Fig. 2a wird eine der ersten Ausführungsform sehr ähnliche zweite Ausführungsform gezeigt. Daher werden funktionell gleiche Teile mit den gleichen Bezugszeichen versehen und hier nur auf die wichtigsten Unterschiede eingegangen.

Die zweite Ausführungsform weist an der Ausgangswelle AW ein sechstes Losrad L6 auf, welches über eine sechste Kupplungseinrichtung CM mit der Ausgangswelle AW drehverbindbar ist. Das sechste Losrad L6 kämmt mit dem zweiten Stirnrad 7 und bildet mit diesem eine sechste Zahnradstufe Z6. Damit kann erreicht werden, dass das Power-Shift-Getriebe 2 für sich alleine gesehen zwei zusätzliche Vorwärtsgänge und einen zusätzlichen Rückwärtsgang bereitstellt.

Das Power-Shift-Getriebe 2 weist eine Eingangswelle EW auf, welche mit der Haupteingangswelle drehverbunden ist und auf der ein erstes Losrad L1 mit drei Stirnrädern 6, 7, 8 angeordnet ist. Die Stirnräder 6, 7, 8 sind allesamt fest mit dem ersten Losrad L1 drehverbunden, sodass eine Drehmomentbeaufschlagung auf ein Stirnrad 6, 7, 8 eine Übertragung dieses Drehmoments auf die anderen ergibt. Das erste Losrad L1 ist über eine erste Kupplungseinrichtung CF mit der Eingangswelle EW drehverbindbar.

Dabei sind die Übersetzungen der vierten, fünften und sechsten Zahnradstufe Z4, Z5, Z6 gleichmäßig abgestuft, wie sich aus den prozentuellen Änderungen der Übersetzungsverhältnisse i der Rückwärtsgänge von einem zum nächsten Gang zeigt. Auch das Gesamtübersetzungsverhältnis der ersten zusammen mit der dritten Zahnradstufe Z1, Z3 ist an die Übersetzungen der vierten, fünften und sechsten Zahnradstufe Z4, Z5, Z6 derart angepasst, dass sich ebenso bei den Vorwärtsgängen gleichmäßige Abstufungen ergeben. Die angegebenen i-Sprung-Werte sind die prozentuellen Änderungen des Übersetzungsverhältnisses des jeweiligen Ganges zum vorherig niedrigeren Gang.

Wie aus Fig. 2b ersichtlich ist, können mit einer derartigen Ausführungsform insgesamt 12 verschiedene Vorwärtsgänge und 6 verschiedene Rückwärtsgänge geschalten werden, wenn man von den Möglichkeiten durch das Kriechganggetriebe 2 absieht.

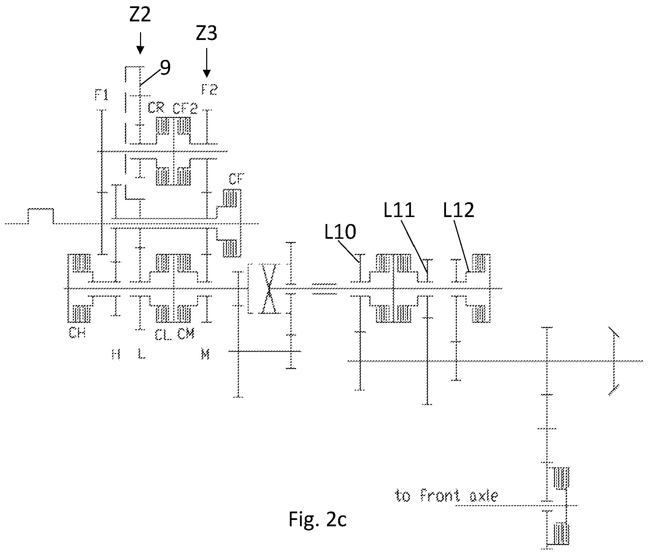

In der Fig. 2c wird eine der zweiten Ausführungsform sehr ähnliche dritte Ausführungsform gezeigt. Daher werden funktionell gleiche Teile mit den gleichen Bezugszeichen versehen und hier nur auf die wichtigsten Unterschiede eingegangen.

Diese dritte Ausführungsform unterscheidet sich von der zweiten darin, dass das weitere Getriebe 4 drei Losräder L10-L12 aufweist, wodurch insgesamt drei verschiedene Übersetzungsverhältnisse durch das weitere Getriebe 4 allein schaltbar sind.

In der dritten Ausführungsform ist das Losrad, das als Drehumkehrstufe ausgeführt ist, auf der, dem weiteren Getriebe 4 abgewandten Seite des Power-Shift-Getriebes 2. Dies kann in bestimmten Ausführungen platzsparender sein.

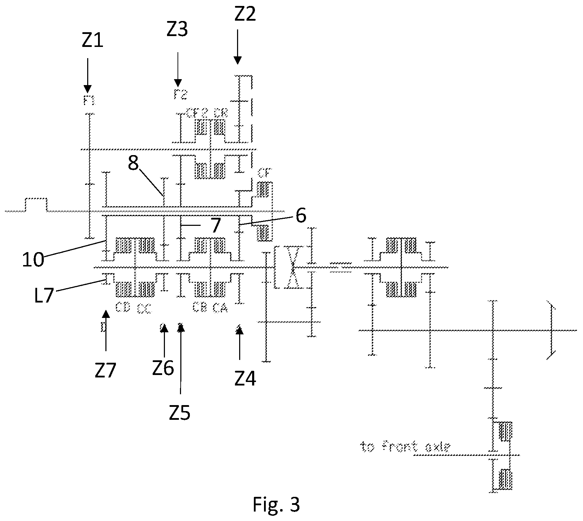

In Fig. 3 wird eine der ersten Ausführungsform sehr ähnliche vierte Ausführungsform gezeigt. Daher werden funktionell gleiche Teile mit den gleichen Bezugszeichen versehen und hier nur auf die wichtigsten Unterschiede eingegangen.

Die vierte Ausführungsform weist an der Ausgangswelle AW ein siebtes Losrad L7 auf, welches über eine siebte Kupplungseinrichtung CD mit der Ausgangswelle AW drehverbindbar ist. Das siebte Losrad 6 kämmt mit dem dritten Stirnrad 8 und bildet mit diesem eine siebte Zahnradstufe Z7. Damit kann erreicht werden, dass das Power-Shift-Getriebe 2 für sich alleine gesehen zwei zusätzliche Vorwärtsgänge und einen zusätzlichen Rückwärtsgang bereitstellt.

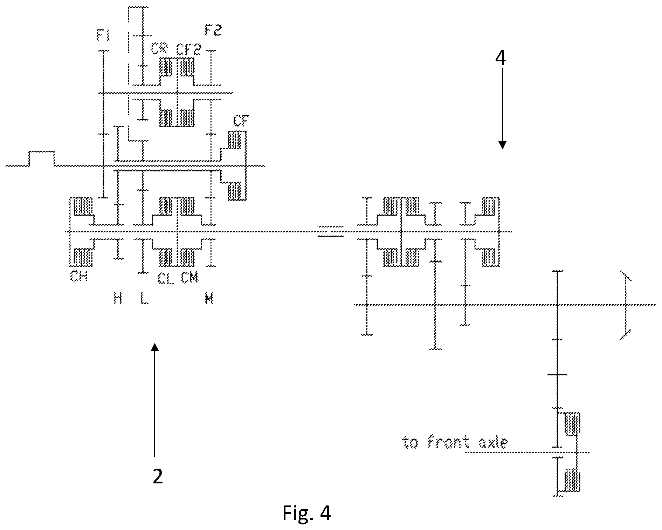

In der Fig. 4 wird eine der dritten Ausführungsform sehr ähnliche fünfte Ausführungsform gezeigt. Daher werden funktionell gleiche Teile mit den gleichen Bezugszeichen versehen und hier nur auf die wichtigsten Unterschiede eingegangen.

Bei dieser Ausführungsform weist die Getriebeanordnung kein Kriechganggetriebe 3 auf, sondern weist nur ein Power-Shift-Getriebe 2 und ein mit dem Power-Shift-Getriebe 2 in Serie geschaltetes weiteres Getriebe 4 auf, welches als Schaltgetriebe ausgeführt ist. Die Ausgangswelle AW des Power-Shift-Getriebes 2 ist mit der Eingangswelle des zweiten Power-Shift-Getriebes 4 drehverbunden.

In den gezeigten Ausführungsformen sind die Losräder L10-L12 des weiteren Getriebes 4 stets auf der Eingangswelle des weiteren Getriebes 4, welche mit der Ausgangswelle AW des Power-Shift-Getriebes 2 drehverbunden oder drehverbindbar ist. Dabei kann auch vorgesehen sein, dass die die Losräder L10-L12 des weiteren Getriebes 4 auch auf der Ausgangswelle des weiteren Getriebes 4 angeordnet sein können.

In sämtlichen der Ausführungsformen gezeigt in den Figuren 1a-4 ist das weitere Getriebe 4 stets als Schaltgetriebe ausgeführt.

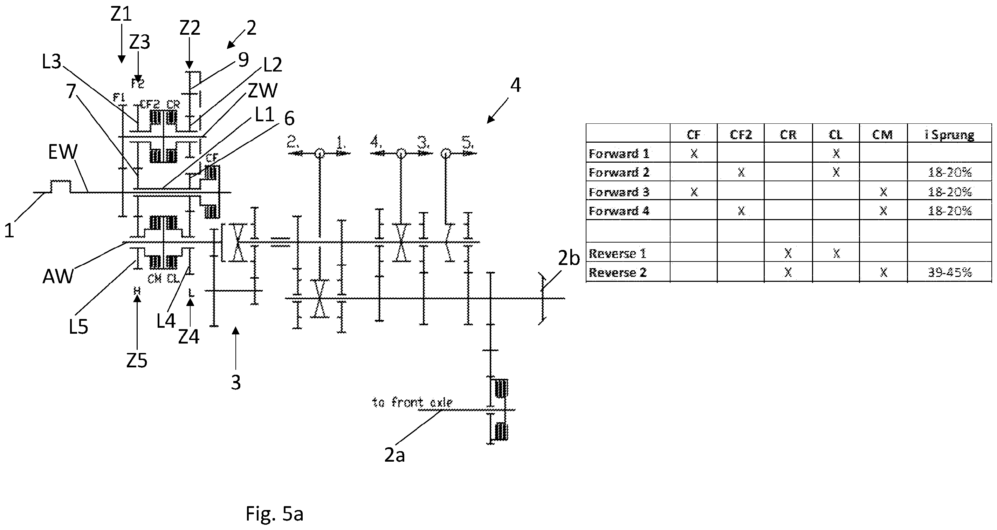

In den Figuren 5a, 5b wird eine der ersten Ausführungsform sehr ähnliche sechste Ausführungsform gezeigt. Daher werden funktionell gleiche Teile mit den gleichen Bezugszeichen versehen und hier nur auf die wichtigsten Unterschiede eingegangen.

Die Getriebeanordnung weist ein Power-Shift-Getriebe 2, ein stromabwärts entlang des Antriebsstrangs geschaltetes, optionales Kriechganggetriebe 3 und ein stromabwärts des Kriechganggetriebes 3 geschaltetes weiteres Getriebe 4 auf. Dabei sind diese drei Elemente in Serie geschaltet. Das weitere Getriebe 4 ist als weiteres Power-Shift-Getriebe ausgeführt und weist insgesamt fünf unterschiedliche Schaltstufen auf und ist als Stirnradgetriebe ausgeführt.

Wie auch bei der ersten Ausführungsform ist das Losrad L2, das als Drehumkehrstufe ausgeführt ist, auf der, dem weiteren Getriebe 4 zugewandten Seite des Power-Shift-Getriebes 2 angeordnet.

In einer alternativen Ausführungsform ist das Losrad, das als Drehumkehrstufe ausgeführt ist, auf der, dem weiteren Getriebe 4 abgewandten Seite des Power-Shift-Getriebes 2. Dies kann in bestimmten Ausführungen platzsparender sein.

Mit einer derartigen Ausführungsform können damit insgesamt 20 verschiedene Vorwärtsgänge und 10 verschiedene Rückwärtsgänge geschalten werden, wenn man von den Möglichkeiten durch das Kriechganggetriebe 3 absieht.

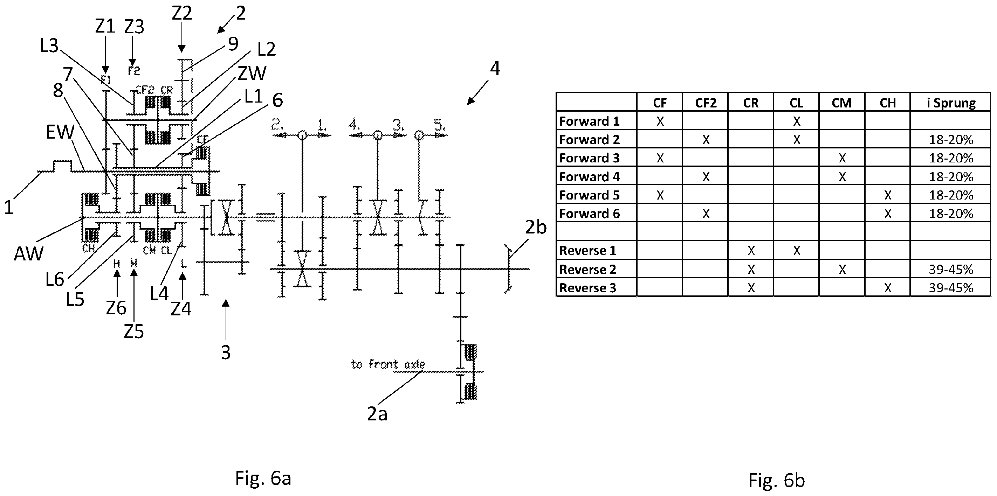

In den Figuren 6a, 6b wird eine der zweiten Ausführungsform sehr ähnliche siebte Ausführungsform gezeigt. Daher werden funktionell gleiche Teile mit den gleichen Bezugszeichen versehen und hier nur auf die wichtigsten Unterschiede eingegangen.

Das Power-Shift-Getriebe 2 ist ident mit jenem der zweiten Ausführungsform ausgeführt, auch ist dessen Anordnung in Bezug zum weiteren Getriebe 4 und dem Kriechganggetriebe 3 gleich. Jedoch ist das weitere Getriebe 4 als weiteres Power-Shift-Getriebe ausgeführt. Dieses ist wie das weitere Getriebe 4 der sechsten Ausführungsform aufgebaut, weist insgesamt fünf unterschiedliche Schaltstufen auf und ist als Stirnradgetriebe ausgeführt.

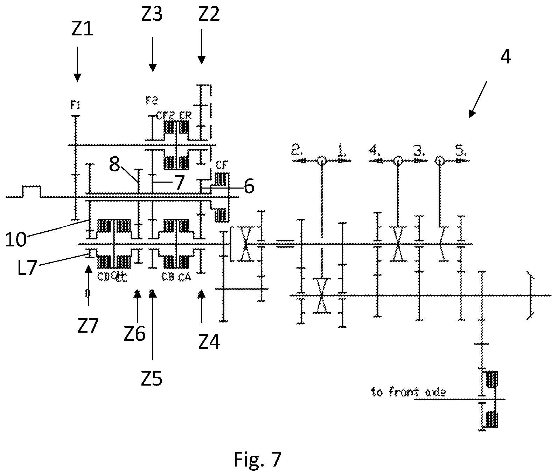

In Fig. 7 wird eine der vierten Ausführungsform sehr ähnliche achte Ausführungsform gezeigt. Daher werden funktionell gleiche Teile mit den gleichen Bezugszeichen versehen und hier nur auf die wichtigsten Unterschiede eingegangen. Das Power-Shift-Getriebe 2 ist ident mit jenem der vierten Ausführungsform ausgeführt, auch ist dessen Anordnung in Bezug zum weiteren Getriebe 4 und dem Kriechganggetriebe 3 gleich. Entsprechende Ausführungen gelten auch hier sinngemäß. Wie in der siebten Ausführungsform das weitere Getriebe 4 statt Schaltgetriebe als Power-Shift-Getriebe mit insgesamt fünf unterschiedliche Schaltstufen und als Stirnradgetriebe ausgeführt.

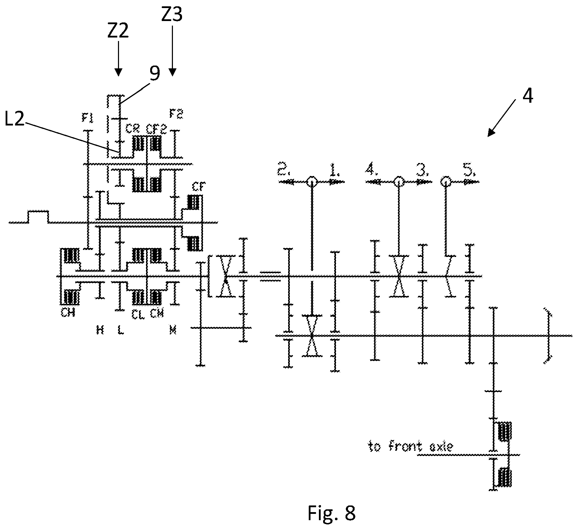

In Fig. 8 wird eine der dritten Ausführungsform sehr ähnliche neunten Ausführungsform gezeigt. Daher werden funktionell gleiche Teile mit den gleichen Bezugszeichen versehen und hier nur auf die wichtigsten Unterschiede eingegangen. Das Power-Shift-Getriebe 2 ist ident mit jenem der dritten Ausführungsform ausgeführt, auch ist dessen Anordnung in Bezug zum weiteren Getriebe 4 und dem Kriechganggetriebe 3 gleich. Entsprechende Ausführungen gelten auch hier sinngemäß. Auch hier ist wie in der siebten Ausführungsform das weitere Getriebe statt Schaltgetriebe als Power-Shift-Getriebe mit insgesamt fünf unterschiedliche Schaltstufen und als Stirnradgetriebe ausgeführt.

In der neunten Ausführungsform ist wie bei der dritten das Losrad, das als Drehumkehrstufe ausgeführt ist, auf der, dem weiteren Getriebe 4 abgewandten Seite des Power-Shift-Getriebes 2. Dies kann in bestimmten Ausführungen platzsparender sein. Auch bei dieser Ausführungsform ist wie in der siebten Ausführungsform das weitere Getriebe statt Schaltgetriebe als Power-Shift-Getriebe mit insgesamt fünf unterschiedliche Schaltstufen und als Stirnradgetriebe ausgeführt.

## Patentansprüche

1. Getriebeanordnung für ein Fahrzeug mit einem Power-Shift-Getriebe (2), wobei
- das Power-Shift-Getriebe (2) eine Eingangswelle (EW), eine Zwischenwelle (ZW) und eine Ausgangswelle (AW) aufweist,
- die Zwischenwelle (ZW) über eine erste Zahnradstufe (Z1) mit der Eingangswelle (EW) drehverbunden oder drehverbindbar ist,
- zumindest ein erstes Losrad (L1) auf der Eingangswelle (EW) angeordnet ist und mit der Eingangswelle (EW) über eine erste Kupplungseinrichtung (CF) mit ihr drehverbindbar ist,
- das erste Losrad (L1) über je eine Zahnradstufe (Z2, Z3) mit zumindest zwei Losrädern (L2, L3) der Zwischenwelle (ZW), welche über Kupplungseinrichtungen (CR, CF2) mit der Zwischenwelle (ZW) drehverbindbar sind, drehverbunden ist und
- es das erste Losrad (L1) über je eine Zahnradstufe (Z4-Z7) mit zumindest zwei Losrädern (L4-L7) der Ausgangswelle (AW), welche über Kupplungseinrichtungen (CL, CM, CH, CD) mit der Ausgangswelle (AW) drehverbindbar sind, drehverbunden ist, **dadurch gekennzeichnet, dass**
die Getriebeanordnung ein weiteres Getriebe (4) mit zumindest zwei verschiedenen Übersetzungsstufen aufweist, wobei das Power-Shift-Getriebe (2) und das weitere Getriebe (4) in Serie geschaltet sind.

2. Getriebeanordnung nach Anspruch 1, **dadurch gekennzeichnet, dass** das weitere Getriebe (4) ein weiteres Power-Shift-Getriebe umfasst und/oder dass das weitere Getriebe (4) ein Schaltgetriebe umfasst.

3. Getriebeanordnung nach Anspruch 1 oder 2, **dadurch gekennzeichnet, dass** das erste Losrad (L1) über Zahnradstufen (Z4-Z7) mit zumindest drei Losrädern (L4-L7) der Ausgangswelle (AW), welche über Kupplungseinrichtungen (CL, CM, CH, CD) mit der Ausgangswelle (AW) drehverbindbar sind, drehverbunden ist.

4. Getriebeanordnung nach einem der Ansprüche 1 bis 3, **dadurch gekennzeichnet, dass** zumindest ein zweites Losrad (L2) auf der Zwischenwelle (ZW) angeordnet ist und über zumindest eine zweite Kupplungseinrichtung (CR) mit ihr drehverbindbar ist,
- dass das erste Losrad (L1) über eine zweite Zahnradstufe (Z2) mit dem zweiten Losrad (L2) drehverbunden ist,
- dass zumindest ein drittes Losrad (L3) auf der Zwischenwelle (ZW) angeordnet ist und über zumindest eine dritte Kupplungseinrichtung (CF2) mit ihr drehverbindbar ist,
- dass das erste Losrad (L1) über eine dritte Zahnradstufe (Z3) mit dem dritten Losrad (L3) drehverbunden ist,
- dass zumindest ein viertes Losrad (L4) auf der Ausgangswelle (AW) angeordnet ist und über zumindest eine vierte Kupplungseinrichtung (CL) mit ihr drehverbindbar ist,
- dass das vierte Losrad (L4) über eine vierte Zahnradstufe (Z4) mit dem ersten Losrad (L1) drehverbunden ist,
- dass zumindest ein fünftes Losrad (L5) auf der Ausgangswelle (AW) angeordnet ist und über zumindest eine fünfte Kupplungseinrichtung (CM) mit ihr drehverbindbar ist,
- dass das fünfte Losrad (L5) über eine fünfte Zahnradstufe (Z5) mit dem ersten Losrad (L1) drehverbunden ist.

5. Getriebeanordnung nach einem der Ansprüche 1 bis 4, **dadurch gekennzeichnet, dass** das Power-Shift-Getriebe (2) dem weiteren Getriebe (4) vorgeschaltet ist.

6. Getriebeanordnung nach einem der Ansprüche 1 bis 5, **dadurch gekennzeichnet, dass** zumindest eine Zahnradstufe (Z2-Z7), welche das erste Losrad (L1) mit einem anderen Losrad (L2-L7), vorzugsweise einem Losrad (L2, L3) der Zwischenwelle (ZW), drehverbindet, besonders vorzugsweise die zweite Zahnradstufe (Z2), als Drehumkehrstufe ausgeführt ist.

7. Getriebeanordnung nach einem der Ansprüche 1 bis 6, **dadurch gekennzeichnet, dass** die Zahnradstufen (Z2, Z3), welche das erste Losrad (L1) und die Losräder (L2, L3) der Zwischenwelle (ZW) drehverbinden, unterschiedliche Übersetzungen aufweisen und/oder dass die Zahnradstufen (Z4-Z7), welche das erste Losrad (L1) mit den Losrädern (L4-L7) der Ausgangswelle (AW) drehverbinden, unterschiedliche Übersetzungen aufweisen, und dass vorzugsweise die Zahnradstufen (Z2-Z7), die das erste Losrad (L1) mit anderen Losrädern (L2-L7) drehverbindet, unterschiedliche Übersetzungen aufweisen.

8. Getriebeanordnung nach einem der Ansprüche 1 bis 7, **dadurch gekennzeichnet, dass** das erste Losrad (L1) mehrere Stirnräder (6,7,8) mit zumindest teilweise unterschiedlichen Durchmessern aufweist und vorzugsweise zumindest ein Stirnrad (6,7) des ersten Losrades (L1) sowohl mit einem Zahnrad einer Zahnradstufe (Z2, Z3) eines Losrades (L2, L3) der Zwischenwelle (ZW) als auch mit einem Zahnrad einer Zahnradstufe (Z4-Z7) eines Losrades (L4-L7) der Ausgangswelle (AW) kämmt.

9. Getriebeanordnung nach Anspruch 8, **dadurch gekennzeichnet, dass** ein erstes Stirnrad (6) des ersten Losrades (L1) mit einem Zahnrad der zweiten Zahnradstufe (Z2), vorzugsweise dem zweiten Losrad (L2), und mit einem Zahnrad der vierten Zahnradstufe (Z4), vorzugsweise dem vierten Losrad (L4), kämmt und/oder dass ein zweites Stirnrad (7) des ersten Losrades (L1) mit einem Zahnrad der dritten Zahnradstufe (Z3), vorzugsweise dem dritten Losrad (L3), und mit einem Zahnrad der fünften Zahnradstufe (Z5), vorzugsweise dem fünften Losrad (L5), kämmt.

10. Getriebeanordnung nach einem der Ansprüche 1 bis 9, **dadurch gekennzeichnet, dass** die Getriebeanordnung ein Kriechganggetriebe (3) aufweist, welches vorzugsweise zwischen dem Power-Shift-Getriebe (2) und dem weiteren Getriebe (4) geschaltet ist.

11. Getriebeanordnung nach einem der Ansprüche 1 bis 10, **dadurch gekennzeichnet, dass** zumindest ein sechstes Losrad (L6) auf der Ausgangswelle (AW) angeordnet ist und über zumindest eine sechste Kupplungseinrichtung (CH) mit ihr drehverbindbar ist, dass das sechste Losrad (L6) über eine sechste Zahnradstufe (Z6) mit dem ersten Losrad (L1) drehverbunden ist.

12. Getriebeanordnung nach einem der Ansprüche 1 bis 11, **dadurch gekennzeichnet, dass** zumindest ein siebtes Losrad (L7) auf der Ausgangswelle (AW) angeordnet ist und über zumindest eine siebte Kupplungseinrichtung (CD) mit ihr drehverbindbar ist, und dass das erste Losrad (L1) über eine siebte Zahnradstufe (Z7) mit dem siebten Losrad (L7) drehverbunden ist.

13. Getriebeanordnung nach einem der Ansprüche 1 bis 12, **dadurch gekennzeichnet, dass** das Gesamtübersetzungsverhältnis der ersten Zahnradstufe (Z1) und zumindest einer Zahnradstufe (Z2, Z3) eines Losrades (L2, L3) der Zwischenwelle (ZW) und des ersten Losrades (L1), vorzugsweise das Gesamtübersetzungsverhältnis der ersten Zahnradstufe (Z1) und der dritten Zahnradstufe (Z3), kleiner 1 ist.

14. Getriebeanordnung nach einem der Ansprüche 1 bis 13, **dadurch gekennzeichnet, dass** die Übersetzungsverhältnisse der Zahnradstufen (Z4-Z7) des ersten Losrades (L1) mit den Losrädern (L4-L7) der Ausgangswelle (AW) im Wesentlichen gleichmäßig abgestuft sind.

15. Getriebeanordnung nach einem der Ansprüche 1 bis 14, **dadurch gekennzeichnet, dass** die Vorwärtsgänge des Power-Shift-Getriebes (2) im Wesentlichen die gleichen Drehzahlabstufungen aufweisen.

## Claims

1. Transmission assembly for a vehicle, comprising a power-shift transmission (2), wherein
- the power-shift transmission (2) has an input shaft (EW), an intermediate shaft (ZW) and an output shaft (AW),
- the intermediate shaft (ZW) is or can be rotatably connected to the input shaft (EW) by means of a first gear stage (Z1),
- at least a first free gear (L1) is arranged on the input shaft (EW) and can be rotatably connected to the input shaft (EW) by means of a first clutch device (CF),
- the first free gear (L1) is rotatably connected by means of one gear stage (Z2, Z3) each to at least two free gears (L2, L3) of the intermediate shaft (ZW), which can be rotatably connected to the intermediate shaft (ZW) by means of clutch devices (CR, CF2), and
- the first free gear (L1) is rotatably connected by means of one gear stage (Z4-Z7) each to at least two free gears (L4-L7) of the output shaft (AW), which can be rotatably connected to the output shaft (AW) by means of clutch devices (CL, CM, CH, CD), **characterised in that** the transmission assembly comprises an additional transmission (4) having at least two different gear ratios, wherein the power-shift transmission (2) and the additional transmission (4) are connected in series.

2. Transmission assembly according to claim 1, **characterised in that** the additional transmission (4) comprises an additional power-shift transmission and/or **in that** the additional transmission (4) comprises a manual transmission.

3. Transmission assembly according to claim 1 or 2, **characterised in that** the first free gear (L1) is rotatably connected by means of gear stages (Z4-Z7) to at least three free gears (L4-L7) of the output shaft (AW), which can be rotatably connected to the output shaft (AW) by means of clutch devices (CL, CM, CH, CD).

4. Transmission assembly according to one of claims 1 to 3, **characterised in that** at least one second free gear (L2) is arranged on the intermediate shaft (ZW) and can be rotatably connected to it by means of at least one second clutch device (CR),
- **in that** the first free gear (L1) is rotatably connected to the second free gear (L2) by means of a second gear stage (Z2),
- **in that** at least a third free gear (L3) is arranged on the intermediate shaft (ZW) and can be rotatably connected to it by means of at least a third clutch device (CF2),
- **in that** the first free gear (L1) is rotatably connected to the third free gear (L3) by means of a third gear stage (Z3),
- **in that** at least a fourth free gear (L4) is arranged on the output shaft (AW) and can be rotatably connected to it by means of at least a fourth clutch device (CL),
- **in that** the fourth free gear (L4) is rotatably connected to the first free gear (L1) by means of a fourth gear stage (Z4),
- **in that** at least a fifth free gear (L5) is arranged on the output shaft (AW) and can be rotatably connected to it by means of at least a fifth clutch device (CM),
- **in that** the fifth free gear (L5) is rotatably connected to the first free gear (L1) via a fifth gear stage (Z5).

5. Transmission assembly according to one of claims 1 to 4, **characterised in that** the power-shift transmission (2) is connected upstream of the additional transmission (4).

6. Transmission assembly according to one of claims 1 to 5, **characterised in that** at least one gear stage (Z2-Z7), which rotatably connects the first free gear (L1) to another free gear (L2-L7), preferably a free gear (L2, L3) of the intermediate shaft (ZW), particularly preferably the second gear stage (Z2), is designed as a rotation reversal stage.

7. Transmission assembly according to one of claims 1 to 6, **characterised in that** the gear stages (Z2, Z3), which rotatably connect the first free gear (L1) and the free gears (L2, L3) of the intermediate shaft (ZW), have different ratios and/or **in that** the gear stages (Z4-Z7), which rotatably connect the first free gear (L1) to the free gears (L4-L7) of the output shaft (AW), have different ratios, and **in that** preferably the gear stages (Z2-Z7) which rotatably connect the first free gear (L1) to other free gears (L2-L7) have different ratios.

8. Transmission assembly according to one of claims 1 to 7, **characterised in that** the first free gear (L1) has a plurality of spur gears (6, 7, 8) with at least partially different diameters and preferably at least one spur gear (6,7) of the first free gear (L1) meshes both with a gear of a gear stage (Z2, Z3) of a free gear (L2, L3) of the intermediate shaft (ZW) and with a gear of a gear stage (Z4-Z7) of a free gear (L4-L7) of the output shaft (AW).

9. Transmission assembly according to claim 8, **characterised in that** a first spur gear (6) of the first free gear (L1) meshes with a gear of the second gear stage (Z2), preferably the second free gear (L2), and with a gear of the fourth gear stage (Z4), preferably the fourth free gear (L4), and/or **in that** a second spur gear (7) of the first free gear (L1) meshes with a gear of the third gear stage (Z3), preferably the third free gear (L3), and with a gear of the fifth gear stage (Z5), preferably the fifth free gear (L5).

10. Transmission assembly according to one of claims 1 to 9, **characterised in that** the transmission assembly has a creeper gear transmission (3), which is preferably connected between the power-shift transmission (2) and the additional transmission (4).

11. Transmission assembly according to one of claims 1 to 10, **characterised in that** at least a sixth free gear (L6) is arranged on the output shaft (AW) and can be rotatably connected to it by means of at least a sixth clutch device (CH), **in that** the sixth free gear (L6) is rotatably connected to the first free gear (L1) by means of a sixth gear stage (Z6).

12. Transmission assembly according to one of claims 1 to 11, **characterised in that** at least a seventh free gear (L7) is arranged on the output shaft (AW) and can be rotatably connected to it by means of at least a seventh clutch device (CD), and **in that** the first free gear (L1) is rotatably connected to the seventh free gear (L7) by means of a seventh gear stage (Z7).

13. Transmission assembly according to one of claims 1 to 12, **characterised in that** the overall transmission ratio of the first gear stage (Z1) and at least one gear stage (Z2, Z3) of a free gear (L2, L3) of the intermediate shaft (ZW) and the first free gear (L1), preferably the overall transmission ratio of the first gear stage (Z1) and the third gear stage (Z3), is less than 1.

14. Transmission assembly according to one of claims 1 to 13, **characterised in that** the transmission ratios of the gear stages (Z4-Z7) of the first free gear (L1) with the free gears (L4-L7) of the output shaft (AW) are substantially evenly stepped.

15. Transmission assembly according to one of claims 1 to 14, **characterised in that** the forward gears of the power-shift transmission (2) have substantially the same speed gradations.

## Revendications

1. Agencement de transmission d'un véhicule comprenant une transmission (2) power-shift, dans lequel
- la transmission (2) power-shift a un arbre (EW) d'entrée, un arbre (ZW) intermédiaire et un arbre (AW) de sortie,
- l'arbre (ZW) intermédiaire est en liaison de rotation avec l'arbre (EW) d'entrée par l'intermédiaire d'un premier étage (Z1) à roue dentée ou peut l'être,
- au moins un premier pignon (L1) fou est monté sur l'arbre (EW) d'entrée et peut être en liaison de rotation avec l'arbre (EW) d'entrée par l'intermédiaire d'un premier dispositif (CF) d'embrayage,
- le premier pignon (L1) fou est, par l'intermédiaire respectivement un étage (Z2, Z3) à roue dentée, en liaison de rotation avec au moins aux deux pignons fous (L2, L3) de l'arbre (ZW) intermédiaire, qui peuvent être en liaison de rotation avec l'arbre (ZW) intermédiaire par l'intermédiaire de dispositifs (CR, CF2) d'embrayage, et
- le premier pignon (L1) fou est, par l'intermédiaire respectivement d'un étage (Z4 à Z7) à roue dentée, en liaison de rotation avec au moins deux pignons (L4 à L7) fous, de l'arbre (AW) de sortie, qui peuvent, par l'intermédiaire de dispositifs (CL, CM, CH, CD) d'embrayage, être en liaison de rotation avec l'arbre (AW) de sortie,
**caractérisé en ce que** l'agencement de transmission a une autre transmission (4) ayant au moins deux étages de multiplications différents dans lequel la transmission (2) power-shift et l'autre transmission (4) sont montées en série.

2. Agencement de transmission suivant la revendication 1, **caractérisé en ce que** l'autre transmission (4) comprend une autre transmission power-shift et/ou **en ce que** l'autre transmission (4) comprend une boîte de vitesse à commande manuelle.

3. Agencement de transmission suivant la revendication 1 ou 2, **caractérisé en ce que** le premier pignon (L1) fou, est par l'intermédiaire d'étages (Z4 à Z7) à roue dentée, en liaison de rotation avec au moins trois pignons (L4 à L7) fous de l'arbre (AW) de sortie, qui peuvent être en liaison de rotation avec l'arbre (AW) de sortie par l'intermédiaire de dispositifs (CL, CM, CH, CD) d'embrayage.

4. Agencement de transmission suivant l'une des revendications 1 à 3, **caractérisé en ce qu'**au moins un deuxième pignon (L2) fou est monté sur l'arbre (ZW) intermédiaire et peut, par l'intermédiaire d'au moins un deuxième dispositif (CR) d'embrayage, être en liaison de rotation avec lui,
- **en ce que** le premier pignon (L1) fou est en liaison de rotation avec le deuxième pignon (L2) fou par un deuxième étage (Z2) à roue dentée,
- **en ce qu'**au moins un troisième pignon (L3) fou est monté sur l'arbre (ZW) intermédiaire et peut, par l'intermédiaire d'au moins un troisième dispositif (CF2) d'embrayage, être en liaison de rotation avec lui,
- **en ce que** le premier pignon (L1) fou est en liaison de rotation avec le troisième pignon (L3) fou par l'intermédiaire d'un troisième étage (Z3) à roue dentée,
- **en ce qu'**au moins un quatrième pignon (L4) fou est monté sur l'arbre (AW) de sortie et peut, par l'intermédiaire d'au moins un quatrième dispositif (CL) d'embrayage, être en liaison de rotation avec lui,
- **en ce que** le quatrième pignon (L4) fou est en liaison de rotation avec le premier pignon (L1) fou par un quatrième étage (Z4) à roue dentée,
- **en ce qu'**au moins un cinquième pignon (L5) fou est monté sur l'arbre (AW) de sortie et peut, par l'intermédiaire d'au moins un cinquième dispositif (CM) d'embrayage, être en liaison de rotation avec lui,
- **en ce que** le cinquième pignon (L5) fou est en liaison de rotation avec le premier pignon (L1) fou par l'intermédiaire d'un cinquième étage (Z5) à roue dentée.

5. Agencement de transmission suivant l'une des revendications 1 à 4, **caractérisé** ce que la transmission (2) power-shift est en amont de l'autre transmission (4).

6. Agencement de transmission suivant l'une des revendications 1 à 5, **caractérisé en ce qu'**au moins un étage (Z2 à Z7) à roue dentée, qui relie à rotation le premier pignon (L1) fou à un autre pignon (L2 à L7) fou, de préférence, à un pignon (L2, L3) fou de l'arbre (ZW) intermédiaire, de manière particulièrement préférée les deux étages (Z2) à roue dentée, est réalisé sous la forme d'un étage à inversion de rotation.

7. Agencement de transmission suivant l'une des revendications 1 à 6, **caractérisé en ce que** les étages (Z2, Z3) à roue dentée, qui relient à rotation le premier pignon (L1) fou et les pignons (L2, L3) fous de l'arbre (ZW) intermédiaire, ont des multiplications différentes et/ou **en ce que** les étages (Z4 à Z7) à roue dentée, qui relient à rotation le premier pignon (L1) fou aux pignons (L4 à L7) fous de l'arbre (AW) de sortie, ont les multiplications différentes et **en ce que**, de préférence, les étages (Z2 à Z7) à roue dentée, qui relient à rotation le premier pignon (L1) fou à d'autres pignons (L2 à L7) fous, ont des multiplications différentes.

8. Agencement de transmission suivant l'une des revendications 1 à 7, **caractérisé en ce que** le premier pignon (L1) fou a plusieurs pignons (6, 7, 8) droits ayant des diamètres au moins en partie différents, de préférence au moins un pignon (6, 7) droit du premier pignon (L1) fou, engrène à la fois avec une roue dentée d'un étage (Z2, Z3) à roue dentée d'un pignon (L2, L3) fou de l'arbre (ZW) intermédiaire et avec une roue dentée d'un étage (Z4 à Z7) à roue dentée d'un pignon (L4 à L7) fou de l'arbre (AW) de sortie.

9. Agencement de transmission suivant la revendication 8, **caractérisé en ce qu'**un premier pignon (6) droit du premier pignon (L1) fou engrène avec une roue dentée du deuxième étage (Z2) à roue dentée, de préférence avec le deuxième pignon (L2) fou et avec une roue dentée du quatrième étage (Z4) à roue dentée, de préférence, avec le quatrième pignon (L4) fou et/ou **en ce qu'**un deuxième pignon (7) droit du premier pignon (L1) fou engrène avec une roue dentée du troisième étage (Z3) à roue dentée, de préférence avec le troisième pignon (L3) fou et avec une roue dentée du cinquième étage (Z5) à roue dentée, de préférence avec le cinquième pignon (L5) fou.

10. Agencement de transmission suivant l'une des revendications 1 à 9, **caractérisé en ce que** l'agencement de transmission a une transmission (3) à vitesse lente qui est montée, de préférence, entre la transmission (2) power-shift et l'autre transmission (4).

11. Agencement de transmission suivant l'une des revendications 1 à 10, **caractérisé en ce qu'**au moins un sixième pignon (L6) fou est monté sur l'arbre (AW) de sortie et peut, par l'intermédiaire d'au moins un dispositif (CH) d'embrayage, être en liaison de rotation avec lui, **en ce que** le sixième pignon (L6) fou est en liaison de rotation avec le premier pignon (L1) fou par l'intermédiaire d'un sixième étage (Z6) à roue dentée.

12. Agencement de transmission suivant l'une des revendications 1 à 11, **caractérisé en ce qu'**au moins un septième pignon (L7) fou est monté sur l'arbre (AW) de sortie et peut, par l'intermédiaire d'au moins un septième dispositif (CD) d'embrayage, être en liaison de rotation avec lui, et **en ce que** le premier pignon (L1) fou est en liaison de rotation avec le septième pignon (L7) fou par l'intermédiaire d'un septième étage (Z7) à roue dentée.

13. Agencement de transmission suivant l'une des revendications 1 à 12, **caractérisé en ce que** le rapport de multiplication d'ensemble du premier étage (Z1) à roue dentée et d'au moins un étage (Z2, Z3) à roue dentée d'un pignon (L2, L3) fou de l'arbre (ZW) intermédiaire et du premier pignon (L1) fou, de préférence, le rapport de multiplication d'ensemble du premier étage (Z1) à roue dentée et du troisième étage (Z3) à roue dentée est plus petit que 1.

14. Agencement de transmission suivant l'une des revendications 1 à 13, **caractérisé en ce que** les rapports de multiplication des étages (Z4 à Z7) à roue dentée du premier pignon (L1) fou avec les pignons (L4 à L7) fou de l'arbre (AW) de sortie sont échelonnés sensiblement uniformément.

15. Agencement de transmission suivant l'une des revendications 1 à 14, **caractérisé en ce que** les vitesses en marche avant de la transmission (2) de power-shift ont sensiblement les mêmes échelonnements de vitesse de rotation.
